# DEMANDE DE BREVET EUROPEEN

(11) **EP 1 064 977 A1**
(43) Date de publication de la demande: **03.01.2001**
(21) Numéro de dépôt: 00420134.9
(22) Date de dépôt: 22.06.2000
(51) Int. Cl.: B01D 29/11, B01D 29/64

(54) **Dispositif de filtration d'un fluide et procédé de nettoyage automatique d'un tel dispositif**

(30) Priorité: 30.06.1999 FR 9908598
(71) Demandeur: SA Cellier Groupe, 73100 Aix Les Bains (FR)
(72) Inventeur: Bastien, Christophe, 73100 Aix les Bains (FR); Tagliaferri, Angelo, 73370 Le Bourget du Lac (FR)
(74) Mandataire: Palix, Stéphane

(57) **Abrégé**

Dispositif de filtration (1) d'un fluide comprenant :
- une enceinte (2) ;
- une cartouche filtrante (5) disposée à l'intérieur de l'enceinte (2) de telle sorte que le fluide à filtrer, traverse la cartouche (5) de l'intérieur vers l'extérieur ;
- une rampe tournante (10) disposée à l'intérieur de la cartouche (5) et comportant une pluralité de buses (20) aptes à asperger la surface interne (7) de la cartouche (5) lors du mouvement de la rampe tournante (10);
- un racle (26) monté sur la rampe tournante (10), et apte à venir au contact de la surface interne (7) de la cartouche (5) pour la décolmater en continu
caractérisé en ce qu'il comprend également une pluralité de gicleurs (30-33) orientés en direction de la surface externe (6) de la cartouche (5), et aptes à asperger la rampe tournante (10) à travers la cartouche filtrante (5), les jets issus des gicleurs (30-33) étant dispersés lors de leur traversée de la cartouche filtrante (5).

## Description

### Domaine technique

L'invention se rattache au domaine des installations de filtration, plus particulièrement à celui de la filtration de dispersions et solutions. Elle trouve des applications dans diverses industries telles que celles de la fabrication des peintures, vernis, résines et adhésifs, des sauces de couchage et solutions de pigments, ainsi que dans la chimie de spécialité.

Elle concerne plus précisément un perfectionnement permettant le nettoyage automatique de dispositifs de filtration, notamment destinés à traiter des produits visqueux à rhéologie non newtonienne.

### Techniques antérieures

De façon connue, un dispositif de filtration de dispersions et solutions notamment visqueuses comporte une enceinte à l'intérieur de laquelle est disposée une cartouche filtrante.

Cette cartouche filtrante présente une porosité calibrée choisie pour assurer la rétention des particules et autres polluants contenus dans le liquide à filtrer.

La surface de cette cartouche peut être réalisée selon différentes techniques telles que l'empilement de plusieurs grilles métalliques, ou encore l'enroulement d'un fil par exemple de section triangulaire.

Dans une architecture communément employée, le fluide à filtrer pénètre dans l'enceinte et se retrouve à l'intérieur de la cartouche, puis traverse la cartouche depuis la surface intérieure vers la surface extérieure pour être ensuite évacué par l'orifice de sortie.

Lorsque les opérations de filtration sont achevées, il est nécessaire d'effectuer un lavage de la cartouche filtrante, pour éviter que les impuretés restant sur la cartouche ne s'agglomèrent sur sa surface, et n'obturent les différentes porosités.

Plusieurs solutions ont été proposées, qui permettent d'éviter d'ouvrir l'enceinte et d'extraire la cartouche pour la soumettre à un lavage.

En effet, on conçoit que l'ouverture de l'enceinte et l'extraction de la cartouche nécessitent des manipulations pénibles, longues et minutieuses, qui rendent la machine indisponible pendant une durée trop importante.

Ainsi, une solution proposée consiste à équiper l'enceinte d'une rampe tournante, disposée à l'intérieur de la cartouche et équipée d'une pluralité de buses aptes à asperger la surface interne de la cartouche lorsque la rampe effectue son mouvement tournant.

Plus précisément, ces buses sont dirigées radialement, et orientées en direction de l'extérieur de la cartouche.

En pratique, lorsque l'opération de filtration proprement dite est terminée, l'enceinte est vidée du liquide à filtrer, et une solution de nettoyage est amenée dans la rampe de buses, puis pulvérisée sur la surface intérieure de la cartouche. Le mouvement de la rampe de buses permet de couvrir la totalité de la surface de la cartouche ainsi que les zones supérieure et inférieure de l'enceinte.

Une telle solution, si elle permet un nettoyage satisfaisant de la surface intérieure de la cartouche, présente un inconvénient majeur.

En effet, la rampe de buses elle-même n'est pas nettoyée et la matière qui s'y est déposée vient contaminer et polluer la solution à filtrer, qui sera introduite dans l'enceinte lors des opérations ultérieures de filtrage.

Pour limiter les risques de voir des matières s'agglomérer à l'intérieur des porosités de la cartouche, on a proposé d'équiper la rampe de buses d'un racle destiné à venir au contact de la surface interne de la cartouche pour la décolmater de façon continue, et éviter ainsi que des particules ne s'y agglomèrent.

Un problème que se propose de résoudre l'invention est celui de l'élimination de toute trace de liquide à filtrer lors du nettoyage, pour éviter les risques de contamination du fluide à traiter ultérieurement.

L'invention se propose de fournir un dispositif dont le nettoyage automatique permet l'élimination de toute trace d'impureté ou contaminant.

### Exposé de l'invention

L'invention concerne donc un dispositif de filtration d'un fluide du type comprenant :
- une enceinte ;
- une cartouche filtrante disposée à l'intérieur de l'enceinte de telle sorte que le fluide à filtrer traverse la cartouche de l'intérieur vers l'extérieur ;
- une rampe tournante disposée à l'intérieur de la cartouche et comportant une pluralité de buses aptes à asperger la surface interne de la cartouche lors du mouvement de la rampe ;
- un racle monté sur la rampe tournante, et apte à venir au contact de la surface interne de la cartouche pour la décolmater en continu.

Ce dispositif se caractérise en ce qu'il comprend également une pluralité de gicleurs orientés en direction de la surface externe de la cartouche, et apte à asperger la rampe tournante à travers la cartouche filtrante, les jets issus des gicleurs étant dispersés lors de leur traversée de la cartouche filtrante.

Autrement dit, l'invention consiste à équiper l'enceinte d'une seconde rampe permettant le nettoyage de la rampe de buses tournante et du racle associé.

De la sorte, la matière déposée sur la rampe de buses interne à la cartouche est totalement éliminée grâce à l'action de la seconde rampe présente sur la paroi de l'enceinte.

Ce nettoyage est particulièrement efficace puisque la surface de la cartouche filtrante joue le rôle de diffracteur du jet de liquide de nettoyage permettant ainsi une aspersion intégrale de la rampe interne.

Ainsi, toute trace du fluide préalablement filtré est éliminée de l'enceinte de la cartouche lors de l'opération de nettoyage.

Dans une forme particulière d'exécution, les gicleurs sont constitués par des ouvertures ménagées dans la paroi de l'enceinte, ce qui facilite la construction mécanique de l'ensemble.

En pratique, chaque gicleur de la seconde rampe est associée à des moyens de commande de l'émission d'un jet de nettoyage.

Autrement dit, chaque gicleur de la seconde rampe peut être actionné indépendamment des autres gicleurs, ce qui permet de bénéficier du débit et de la pression maximum sur un seul gicleur. De la sorte, l'effet de dispersion obtenu grâce à la surface filtrante de la cartouche est amélioré, et par conséquent l'efficacité du nettoyage complet est accrue.

Dans une forme particulière de réalisation, le dispositif comporte des moyens de détection de la position angulaire de la rampe tournante par rapport à la pluralité de gicleurs.

Autrement dit, le dispositif permet de positionner la rampe tournante selon au moins deux positions diamétralement opposées permettant de nettoyer successivement les parties interne et externe de la rampe tournante.

L'invention concerne un procédé de nettoyage automatique d'un tel dispositif consistant en un enchaînement de séquences dans lesquelles, après avoir vidé l'enceinte du fluide à filtrer :
- on fait effectuer à la rampe tournante, un passage sur la totalité de la surface interne de la cartouche, en injectant un liquide de nettoyage par les buses de la rampe tournante ;
- on immobilise la rampe tournante dans une position diamétralement opposée à la pluralité de gicleurs ;
- on fait émettre par chaque gicleur, séquentiellement, un jet de liquide de nettoyage ;
- on déplace la rampe tournante jusqu'à une position dans laquelle elle est en regard de la pluralité de gicleurs ;
- on fait émettre par chaque gicleur, séquentiellement, un jet de liquide de nettoyage ;
- on déplace la rampe tournante jusqu'à une position dans laquelle elle est diamétralement opposée à la pluralité de gicleurs ;
- on fait émettre par chaque gicleur, simultanément, un jet de liquide de nettoyage ;
- on évacue de l'enceinte le liquide de nettoyage.

De la sorte, selon ce séquencement, il est possible d'obtenir un nettoyage complet et optimal de l'intégralité de la cartouche et de la rampe de buses.

### Description sommaire des figures

La manière de réaliser l'invention, ainsi que les avantages qui en découlent ressortiront bien de la description des modes de réalisation qui suivent, à l'appui des figures annexées dans lesquelles :

La figure 1 est une vue de côté schématique d'un dispositif conforme à l'invention.

Les figures 2 à 12 sont des représentations de la figure 1 au fur et à mesure des étapes du procédé de nettoyage conforme à l'invention.

### Manière de réaliser l'invention

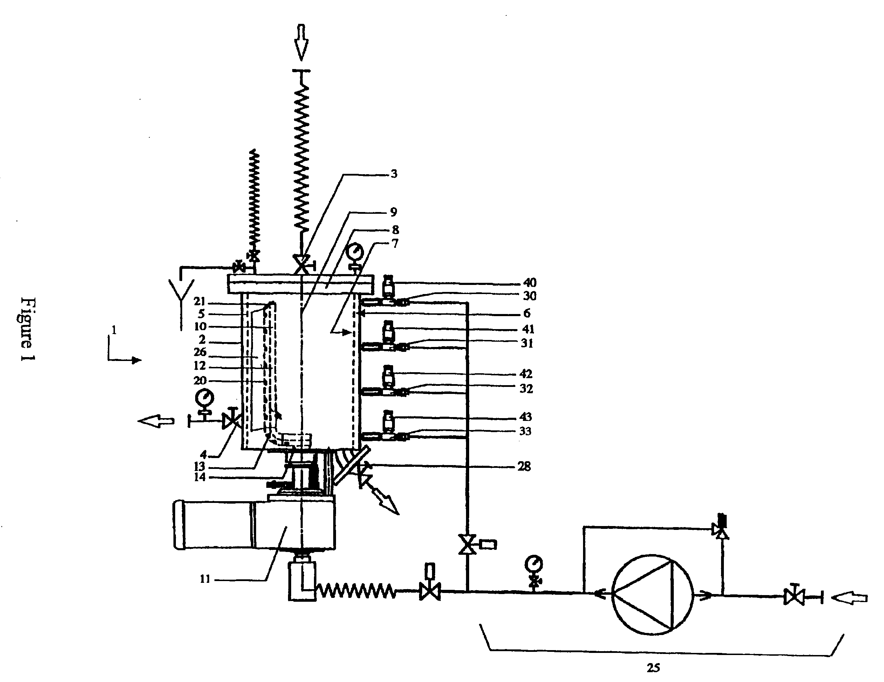

Comme déjà dit, l'invention concerne un dispositif de filtration (1), tel qu'illustré schématiquement à la figure 1, et qui comprend essentiellement une enceinte (2) pourvue d'un orifice d'entrée (3) du liquide à filtrer ainsi que d'un orifice de sortie (4) du liquide ayant subi l'opération de filtration.

Une telle enceinte (2) de forme générale cylindrique, reçoit intérieurement une cartouche filtrante (5) également cylindrique. Une telle cartouche (5) peut être réalisée selon de nombreuses technologies, en fonction du type de fluide à filtrer.

Cette cartouche (5) est disposée à l'intérieur de l'enceinte (2) de telle sorte que le fluide à filtrer pénétrant par l'orifice d'entrée (3) se retrouve à l'intérieur dans la cartouche (5), et qu'après avoir traversé la surface filtrante de la cartouche (5), le fluide se trouve au contact de la face extérieure (6) de la cartouche (5) pour être ensuite extrait par l'orifice de sortie (4).

De façon connue, l'enceinte (2) est équipée d'une rampe tournante (10), associée à un moteur (11) qui en assure la mise en rotation à l'intérieur de la cartouche (5). Plus précisément, cette rampe tournante (10) présente une partie principale (12) parallèle à l'axe de révolution (9) de la cartouche (5) et une partie de raccordement (13), reliant cette partie principale (12) à l'axe (14) du moteur d'entraînement (11). Cette rampe tournante (10), lorsqu'elle est mise en rotation, parcourt une trajectoire à proximité de la surface intérieure (7) de la cartouche filtrante (5).

Cette rampe (10) est équipée d'une pluralité de buses (20) permettant l'aspersion de la surface intérieure (7) de la cartouche (5) lorsque la rampe (10) effectue son mouvement de rotation.

Des buses (20) sont disposées également à l'extrémité haute (21) de la rampe (10) pour permettre l'aspersion du dessous du couvercle (8) de l'enceinte (2).

Des buses sont également disposées à la jonction entre la partie principale (12) de la rampe et la partie (13) de raccordement à l'axe (14) du moteur (11), pour permettre une aspersion de la partie basse de l'enceinte (2).

Cette rampe (10) est alimentée par le circuit (25) de liquide de nettoyage, au niveau d'un passage axe ménagé au niveau de l'axe moteur.

Pour améliorer le nettoyage de la cartouche, cette rampe (10) est équipée d'un racle de décolmatage (26), qui parcourt la surface intérieure (7) de la cartouche (5) en permanence, et qui en détache donc de façon continue, les impuretés qui auraient tendance à s'y agglomérer pendant la phase de filtration.

Les différentes buses (20) de la rampe tournante (10) sont alimentées, comme définies ci-après, lors de l'opération spécifique de nettoyage, durant laquelle l'enceinte (2) ne contient plus de fluide à filtrer.

L'enceinte (2) comporte également, au niveau de sa partie basse, un orifice d'évacuation (28) destiné notamment à vider l'enceinte (2) lorsque celle-ci contient du fluide à filtrer, juste avant l'opération de nettoyage, ainsi que l'évacuation du liquide de nettoyage au cours de l'opération de nettoyage proprement dite.

Selon une caractéristique de l'invention, l'enceinte (2) est équipée d'une pluralité de gicleurs (30-33), orientés en direction de la surface extérieure (6) de la cartouche (2). Ces gicleurs (30-33) au nombre de quatre dans la forme de réalisation illustrée à la figure 1, sont disposés selon une génératrice de l'enceinte (2). Chacun de ces gicleurs (30-33) est constitué d'une tubulure soudée ou vissée sur l'extérieur de l'enceinte (2), et reliée à une ouverture percée à l'intérieur de la paroi de l'enceinte (2). Chacune de ces tubulures est associée à une électrovanne (40-43) permettant l'alimentation en liquide du nettoyage depuis le circuit d'alimentation (25).

Selon une caractéristique de l'invention, lorsqu'un gicleur (30-33) émet un jet de liquide de nettoyage, celui-ci vient au contact de la surface extérieure (6) de la cartouche (2), et traverse cette dernière en étant dispersé, compte tenu de la structure fine de la cartouche (5). Cette dispersion permet donc une aspersion d'une surface relativement large à l'intérieur de la cartouche (5). Un nombre de gicleurs (30-33) même limité assure donc une couverture totale de l'intérieur de la cartouche.

En effet, comme déjà dit, un des objectifs des gicleurs (30-33) est d'assurer le nettoyage de la rampe tournante (10), qui ne peut être nettoyée par la seule présence des buses (20) qui la recouvrent.

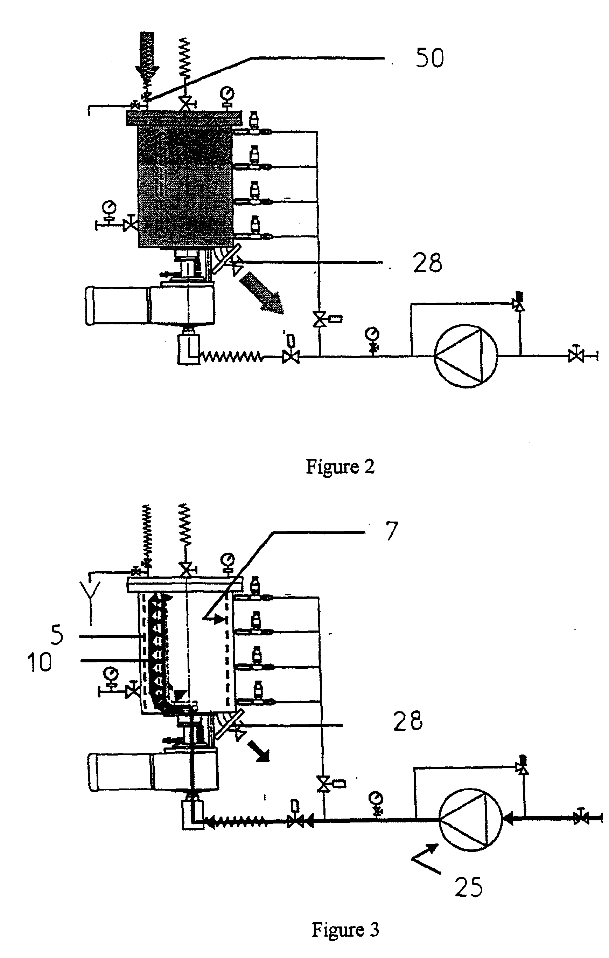

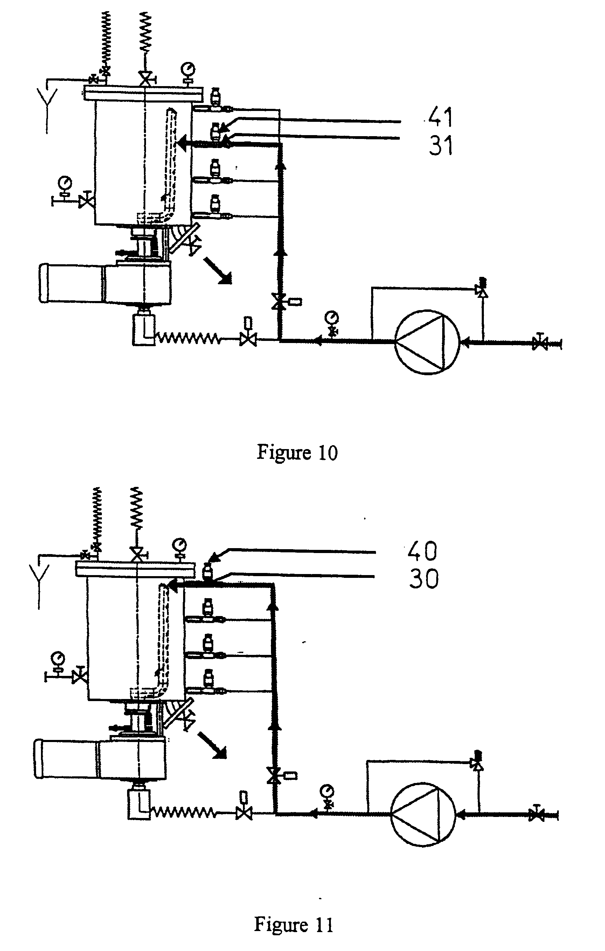

Les différentes étapes du procédé de nettoyage conformes à l'invention sont décrites en référence aux figures 2 à 12.

Ainsi, après une phase de filtration, on provoque, comme illustré à la figure 2, l'évacuation du liquide présent à l'intérieur de la cartouche, grâce à l'action d'air comprimé introduit par l'orifice (50) prévu à cet effet. Le liquide restant est évacué par l'orifice d'évacuation (28).

Par la suite, la rampe interne (10), qui continue sa rotation, est alimentée par le circuit de liquide de nettoyage (25). Les différentes buses (20) assurent une aspersion de l'intégralité de la surface interne (7) de la cartouche (5) et des surfaces supérieure et inférieure de l'enceinte (2), au fur et à mesure du mouvement de la rampe interne (10).

Le liquide de nettoyage est évacué au fur et à mesure par l'orifice d'évacuation (28) comme illustré à la figure 3.

Par la suite, la rampe (10) est immobilisée dans une position diamétralement opposée à la génératrice des gicleurs (30-33) montés sur l'enceinte (2).

L'arrêt en position est déterminé grâce à un capteur de position (non représenté) associé au moteur (11) de mise en rotation de la rampe tournante (10).

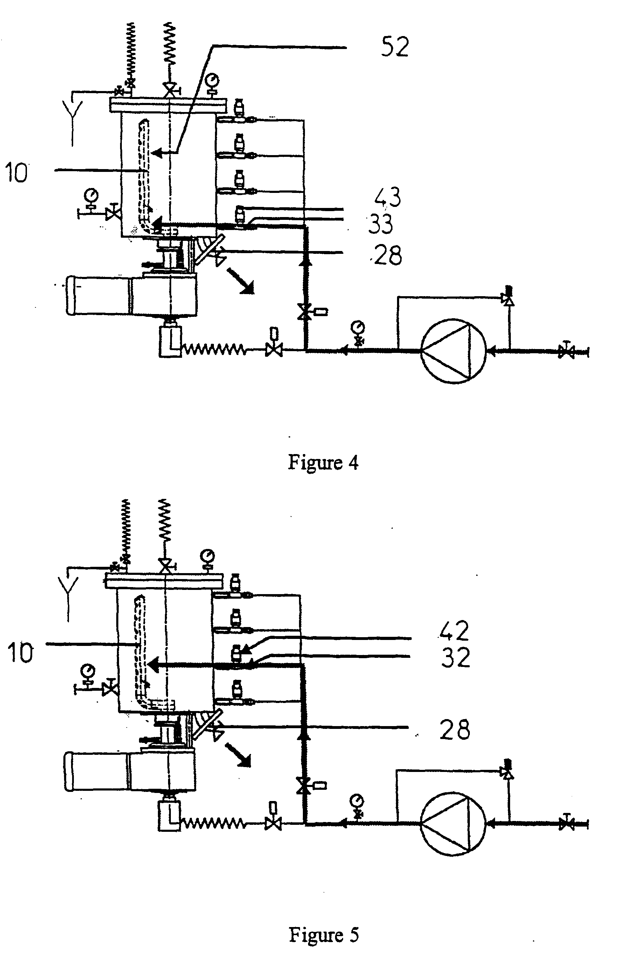

Ainsi, comme illustré à la figure 4, la face arrière (52) de la rampe tournante (10) est orientée en direction des gicleurs (30-33).

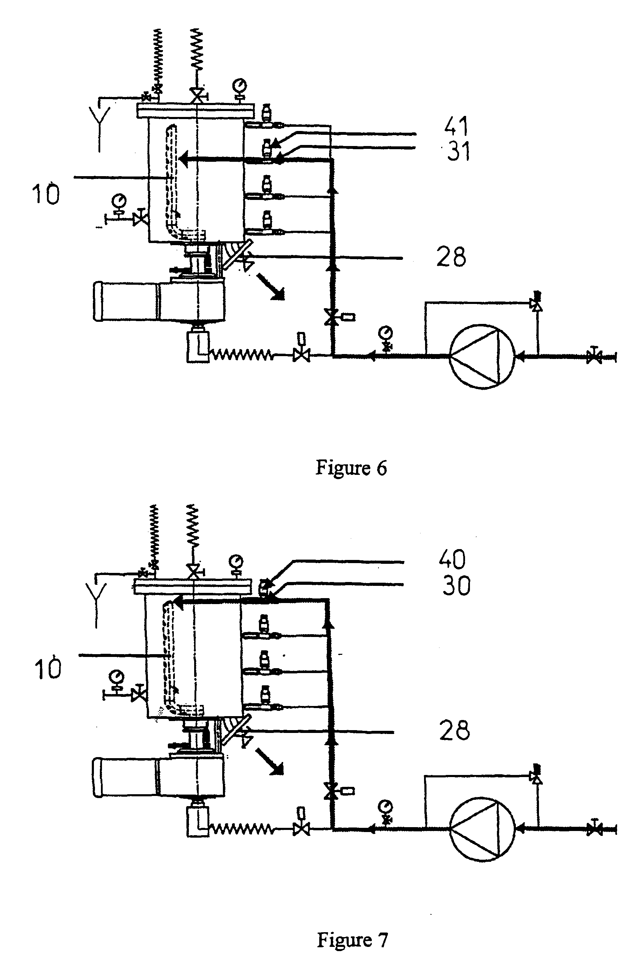

Par la suite comme illustré aux figures 4 et 7, les différents gicleurs (30-33) sont mis en action indépendamment et successivement, par la commande séquentielle des quatre électrovannes (40-43) associées aux quatre gicleurs (30-33).

De la sorte, le nettoyage de la face (52) de la rampe tournante (10) orientée vers l'axe de révolution (9) de la cartouche (5) s'effectue en bénéficiant de la totalité du débit que peut fournir le circuit d'alimentation (25).

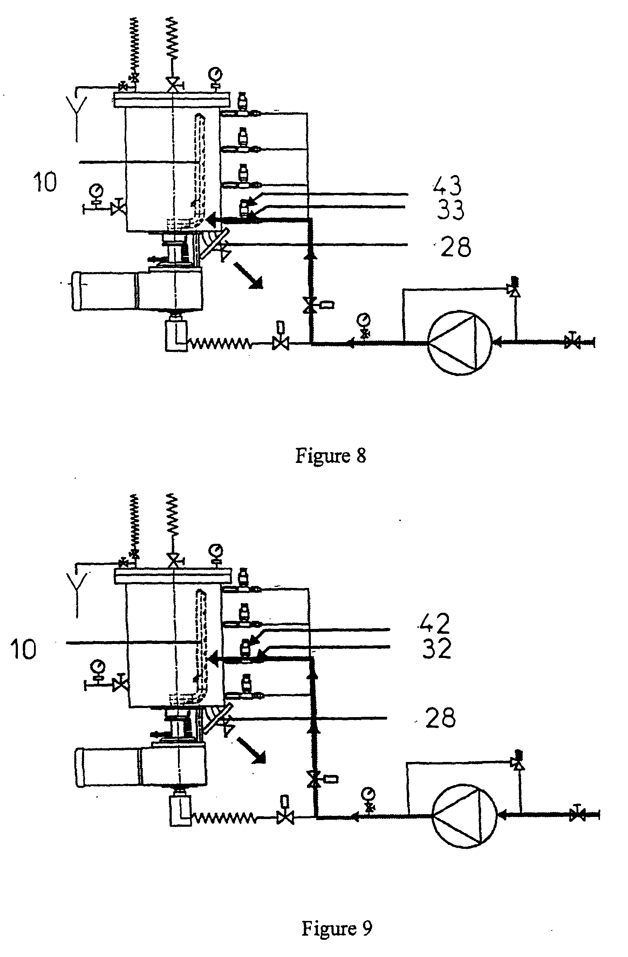

Par la suite, la rampe tournante (10) est mise en rotation pour arriver, comme illustré à la figure 8, dans une position dans laquelle elle est en regard de la rampe (11) de gicleurs (30-33). L'arrêt en position est obtenu grâce à l'information issue du capteur de position précité.

Par la suite, comme illustré aux figures 8 à 11, les quatre gicleurs (30-33) sont mis en action indépendamment et séquentiellement par la commande des différentes électrovannes (40-43). Les deux faces de la rampe tournante (10) sont ainsi efficacement nettoyées.

Le liquide de nettoyage ruisselant sur la rampe (10) est continûment évacué par l'orifice d'évacuation (28).

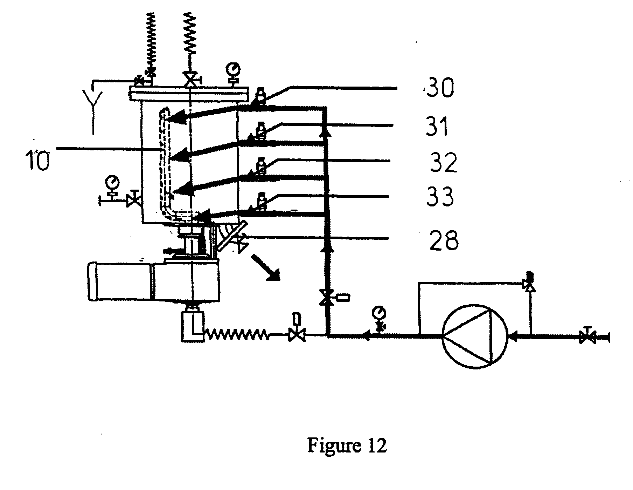

Par la suite, comme illustré à la figure 12, la rampe tournante (10) est mise en rotation une fois supplémentaire, pour arriver dans la position diamétralement opposée à la rampe de gicleurs (30-33).

Dans ce cas, les quatre électrovannes (40-43) sont commandées simultanément, ce qui permet une aspersion de la totalité de la rampe tournante (10) en même temps. On effectue ainsi un rinçage des impuretés qui auraient pu être repoussées lors des opérations illustrées aux figures 8 à 11.

En pratique, en utilisant un panier filtrant à fentes inclinées de 150 microns de largeur, et en injectant de l'eau par les gicleurs, sous une pression de 18 bars, avec un débit de 4 m³ par heure, on réussit à nettoyer un panier et la rampe tournante souillée par les impuretés présentes dans une solution de peinture aqueuse destinée au secteur du bâtiment.

Il ressort de ce qui précède que le dispositif de filtration conforme à l'invention présente de multiples avantages et notamment :
- la possibilité de nettoyer de façon très efficace l'intégralité de la cartouche filtrante et de la rampe tournante supportant le racle ;
- la possibilité d'utiliser des liquides de nettoyage variés adaptés à la viscosité et à la nature chimique des solutions filtrées ;
- une grande souplesse dans l'enchaînement des opérations de filtration, grâce à un nettoyage efficace qui permet par exemple d'enchaîner la filtration de peinture de couleurs différentes ;
- une optimisation de la quantité de liquide de nettoyage consommé

### Applications industrielles

Le dispositif de filtration conforme à l'invention, et le procédé de nettoyage correspondant peuvent être appliqués dans de très nombreuses industries dans lesquelles les opérations de filtration sont nécessaires, et notamment dans le cas de produits relativement visqueux tels que les peintures, les vernis, les résines et adhésifs, les sauces de couchage, les suspensions de pigments et la chimie de spécialité.

## Revendications

1. Dispositif de filtration (1) d'un fluide comprenant :
- une enceinte (2) ;
- une cartouche filtrante (5) disposée à l'intérieur de l'enceinte (2) de telle sorte que le fluide à filtrer, traverse la cartouche (5) de l'intérieur vers l'extérieur ;
- une rampe tournante (10) disposée à l'intérieur de la cartouche (5) et comportant une pluralité de buses (20) aptes à asperger la surface interne (7) de la cartouche (5) lors du mouvement de la rampe tournante (10) ;
- un racle (26) monté sur la rampe tournante (10), et apte à venir au contact de la surface interne (7) de la cartouche (5) pour la décolmater en continu
caractérisé en ce qu'il comprend également une pluralité de gicleurs (30-33) orientés en direction de la surface externe (6) de la cartouche (5), et aptes à asperger la rampe tournante (10) à travers la cartouche filtrante (5), les jets issus des gicleurs (30-33) étant dispersés lors de leur traversée de la cartouche filtrante (5).

2. Dispositif selon la revendication 1, caractérisé en ce que les gicleurs (30-33) sont constitués par des ouvertures ménagées dans la paroi de l'enceinte (2).

3. Dispositif selon la revendication 1, caractérisé en ce que chaque gicleur (30-33) est associé à des moyens de commande (40-43) de l'émission d'un jet de liquide de nettoyage.

4. Dispositif selon la revendication 1, caractérisé en ce qu'il comporte des moyens de détection de la position angulaire de la rampe tournante (10) par rapport à la pluralité de gicleurs (30-33).

5. Procédé de nettoyage automatique du dispositif selon les revendications 1 à 4, caractérisé en ce qu'il consiste, après avoir vidé l'enceinte (2) du fluide à filtrer :
- à faire effectuer à la rampe tournante (10), un passage sur la totalité de la surface interne (7) de la cartouche (5), en faisant émettre un liquide de nettoyage par les buses (20) de la rampe tournante (10) ;
- à immobiliser la rampe tournante (10) dans une position diamétralement opposée à la pluralité de gicleurs (30-33) ;
- à faire émettre par chaque gicleur (30-33) , séquentiellement, un jet de liquide de nettoyage ;
- à déplacer la rampe tournante (10) jusqu'à une position dans laquelle elle est en regard de la pluralité de gicleurs (30-33) ;
- à faire émettre par chaque gicleur (30-33) , séquentiellement, un jet de liquide de nettoyage ;
- à déplacer la rampe tournante (10) jusqu'à une position dans laquelle elle est diamétralement opposée à la pluralité de gicleurs (30-33) ;
- à faire émettre par chaque gicleur (30-33), simultanément, un jet de liquide de nettoyage ;
- à évacuer de l'enceinte (2) le liquide de nettoyage.
